# EUROPEAN PATENT APPLICATION

(11) **EP 1 486 706 A1**
(43) Date of publication of application: **15.12.2004**
(21) Application number: 04076512.5
(22) Date of filing: 25.05.2004
(51) Int. Cl.: F16K 3/24

(54) **Self-Cleaning valve**

(30) Priority: 10.06.2003 SE 0301689
(71) Applicant: AB Markaryds Metallarmatur, 285 00 Markaryd (SE)
(72) Inventor: Carlsson, Leif, 341 31 Ljungby (SE)
(74) Representative: Wallengren, Yngvar

(57) **Abstract**

A regulator valve for a heating system with a liquid medium comprises a valve housing (1) and a valve cone (5). The valve housing (1) has an inlet (13) and an outlet (14). Between the inlet (13) and the outlet (14), there is a bore (6) with a gland. The valve cone (5) is supported by a valve spindle (3). The valve cone (5) is axially reciprocally movable in relation to the gland under the action of a movement device and has a closed position and a regulation area in association with the gland. The valve cone (5) is movable past the closed position into the bore (6).

## Description

### TECHNICAL FIELD

The present invention relates to a regulator valve for a heating system with a liquid flow medium, comprising a valve housing with an inlet and an outlet, a bore located in flow terms between the inlet and the outlet and having a gland and a valve cone supported by a valve spindle, the cone being, under the action of a movement device, axially reciprocally movable in relation to the gland, the valve cone having a closed position and a regulation area in association with the gland.

### BACKGROUND ART

Valves for heating systems with water-borne heat are known to a considerable extent in the art. As was mentioned above, a large number of these valves possess a valve housing through which a liquid, typically water, flows. Somewhere in the valve housing, there is located a bore through which the liquid flows in a pre-determined direction. The bore has a gland at which there is disposed a valve cone. In such instance, the gland of the bore functions as a valve seat. The valve cone is reciprocally movable for regulating the flow through the bore and thereby the flow through the valve housing. The valve cone has a completely closed position, where no flow is permitted through the valve housing, and a large number of partly open positions between the closed position and a fully open position. In that the valve cone assumes different positions, the volume of liquid which at any given second flows through the valve housing is regulated.

The valve cone seals against the end of the bore, i.e. the cone abuts or seats substantially against a circular or annular shaped portion which is disposed at the end of the channel. Possibly, the end of the bore has a trimmed or bevelled area against which a slightly conical valve cone advantageously seals. The trimmed or bevelled portion also acts on the flow through the valve in positions between the fully open and the fully closed positions.

In general, the movements of the valve cone in relation to the valve seat are quite small and the distance between the fully open and fully closed positions is rather slight, typically of the order of magnitude of one or a few millimetres. The valve cone and the valve seat are pressed against one another in the closed position, and any possible foreign matter that is in the liquid flowing through the valve such as, for example, sand, iron particles, calcium furring etc. are deposited on the valve cone and the valve seat and accumulate over a lengthy period of time. In due course, these deposits may result in it being impossible to close the valve fully. This entails, on the one hand, increased wear which, in turn, results in shortened service life and, on the other hand, to additional problems. A few of these problems are noise from the liquid which flows through the untight valve, losses of energy because liquid continues to flow through the valve when it should have been closed, because the temperature in the premises to be heated up is in actual fact sufficient, and difficulties in replacing or cleaning individual valves which are affected by these problems. A possible replacement or cleaning of a valve can take place only if the conduit system is empty and, for this reason, it is often the practice to wait until such time as the problem has arisen in a large number of valves in the system. This means that the problems with noise and energy losses may continue for a lengthy period of time. Both the valve seat and the valve cone may need to be cleaned or replaced.

### PROBLEM STRUCTURE

The object of the present invention is therefore to realise a valve which is not negatively affected in the above-outlined ways by foreign matter or deposits in the liquid flowing in the piping system.

### SOLUTION

The object forming the basis of the present invention will be attained if the regulator valve intimated by way of introduction is characterised in that the valve cone is movable past the closed position into the bore.

### BRIEF DESCRIPTION OF THE ACCOMPANYING DRAWINGS

The present invention will now be described in greater detail hereinbelow, with reference to the accompanying Drawings. In the accompanying Drawings:
- Fig. 1: is a cross section through a prior art valve in the open position;
- Fig. 2: is a cross section through a valve according to the present invention in the open position;
- Fig. 3: is a view corresponding to that of Fig. 2 of the valve in the closed position; and
- Fig. 4: is a cross section, on a larger scale, of the seal disposed on the valve cone.

### DESCRIPTION OF PREFERRED EMBODIMENT

In the following description, use will be made of terms such as up and down. These terms refer to the orientation of the valve in the accompanying Drawings, regardless of how the valve is mounted when in use.

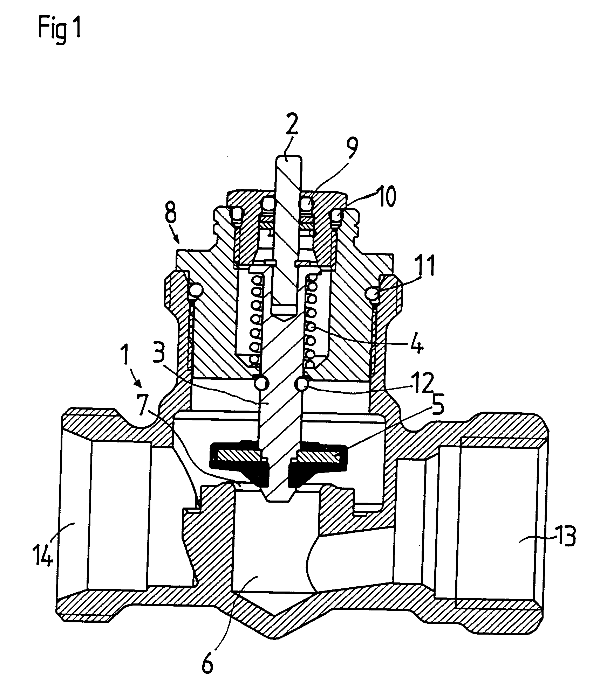

Fig. 1 shows a conventional valve which may often be regulated with the aid of thermostatic regulators. The valve has a valve housing 1 which has an inlet 13 and an outlet 14. Between the inlet 13 and the outlet 14, there is disposed a bore 6 through which the water flows when the valve is open. Above the valve housing 1, there is disposed a so-called stuffing box 8 with a pair of seals 9 and 10. Additional seals 11 and 12 are provided for sealing against the so-called insert housing 27, the seal 12 being active only on replacement of the seals 9 and 10 in the stuffing box 8. The seals 9, 10, 11 and 12 prevent water from leaking out from the valve housing 1 into its surroundings. Typically, the seals 9, 10, 11 and 12 consist of O-rings.

The valve is actuated by a movement device which may be a thermostat device. On closure of the valve, the movement device (not shown on the Drawings) acts in that a pin 2 is pressed inwards in the valve apparatus, and acts in turn on a spindle 3. The spindle 3, which supports a valve cone 5, in turn compresses a return spring 4 when the pin 2 is pressed inwards. At the same time, the valve cone 5 is moved towards a valve seat 7 which is disposed at the gland of the bore 6. When the valve cone 5 comes into contact with the valve seat 7, the valve is closed. In the reverse procedure, the pin 2 will be released, whereby the force on the return spring 4 is reduced and this in turn acts on the spindle 3 in an upward direction in the Figure, whereby the valve cone 5 is lifted from the valve seat 7. In such instance, the valve is opened.

In the closed position, the valve cone 5 abuts partly against the valve seat 7 at the gland of the bore 6. At the same time, the valve cone 5 projects in a distance in the centre of the bore 6 so that a regulation is obtained where the flow through the valve is gradually throttled or released, respectively, when the valve cone 5 moves. Even if the movements of the valve cone 5 in relation to the valve seat 7 are relatively slight, the contact forces between the valve cone 5 and the valve seat 7 when the valve is closed are relatively great. As a result, foreign matter in the liquid flowing through the valve tends to be deposited and compressed on the valve cone 5 and the valve seat 7. The foreign mater which first fastened to these parts then forms the foundation of growth of further deposits. In due course, the deposited foreign matter will prevent full closure of the valve, as has already been described in the introduction above.

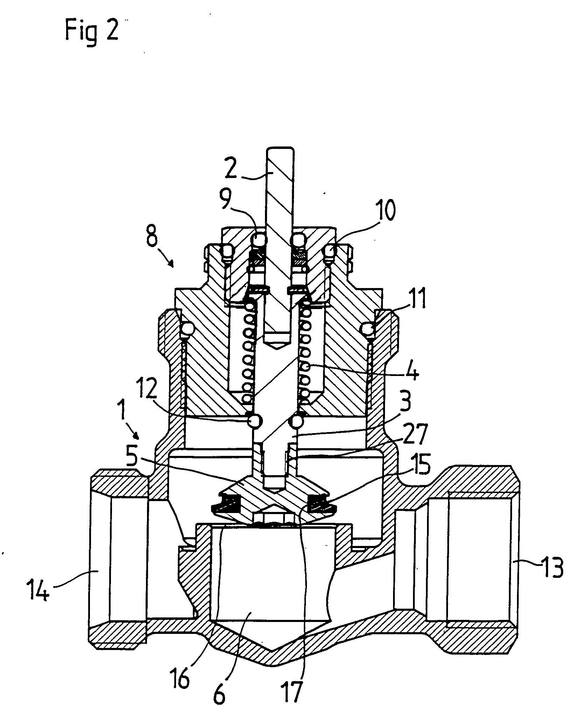

Fig. 2 shows a valve according to the present invention. In its major parts, the valve corresponds to the prior art, conventional valve that is illustrated in Fig. 1, and corresponding components have been given the same reference numerals. Like the valve in Fig. 1, the valve according to the present invention is shown in its open position in Fig. 2. The valve operates largely as a conventional valve when it is in its open position. In the same manner as the valve according to Fig. 1, the valve according to the present invention has a pin 2 for actuating the spindle 3 which in turn acts on the return spring 4. The valve further displays a valve cone 5 and a bore 6 which lies between the inlet 13 and the outlet 14 of the valve housing 1.

In the same manner as in the conventional valve, there is provided a stuffing box 8 with a series of seals in the form of O-rings 9, 10, 11 and 12.

The valve further displays a fully open position, a closed position and also a series of regulatory positions lying therebetween, where the valve is open to varying degrees.

The valve cone 5 is further provided with a circumferential gasket ring 15.

In detail, the valve cone 5 is provided with a thread 27 or a corresponding fixing means at its end facing towards the spindle 3 for interconnection therewith. At its lower end, the valve cone 5 is substantially frusto-conical in shape. This configuration has been selected to impart the desirable flow properties in the regulator area between a fully opened valve and a closed valve. An annular recess 17 is provided around the valve cone 5 in which the gasket ring 15 may be accommodated. The recess 17 may have different configurations, but in principle corresponds to the cross sectional configuration of the gasket ring 15. At the gland of the bore, i.e. its upper region in the Figure, a slight bevel 16 is provided. The bevel 16 functions for guiding the valve cone 5 with its gasket ring 15 in the bore 6. The bevel 16 also assists in imparting a favourable flow pattern through the valve when it is partly open. The bore 6 proper is otherwise substantially cylindrical. Its cross section is typically a few tenths of a millimetre larger than the valve cone 5 proper, but a few tenths of a millimetre smaller than the diameter of the gasket ring 15 in the mounted, but unloaded state.

The gasket ring 15 is substantially annular and is disposed to fit into a circumferential recess 17 on the valve cone 5. In the preferred embodiment, the gasket ring 15 displays a cross section that, on the one hand, fits into the recess 17 in the cone 5 and, on the other hand, functions for sealing against the inside of the bore 6.

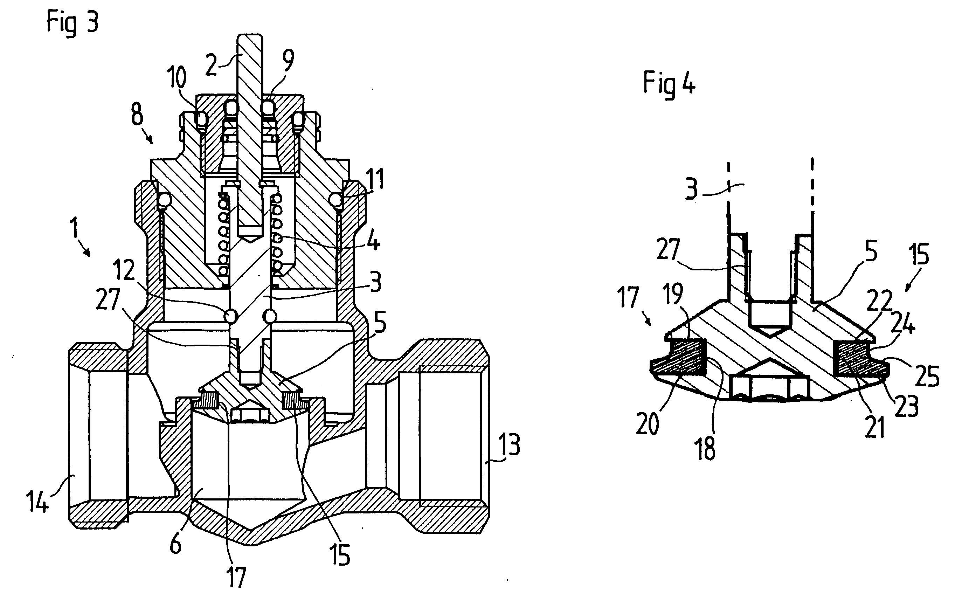

In Fig. 3, the valve according to the present invention is shown in the closed position. As will be apparent from the Figure, the valve cone 5 extends a distance into the bore 6 so that the sealing preferably takes place against the inside of the bore 6, i.e. against the interior circumferential surface of the substantially cylindrical space. The gasket ring 15, which is manufactured from a deformable rubber-like elastic material, is deformed and by such means effectively seals against the inside of the bore 6. The seal is certainly effective, but involves no forces of the order of magnitude of those described for the conventional valve, since the sealing takes place transversely in relation to the direction of travel of the valve cone 5. As a result, no compression of the foreign matter from the flowing liquid takes place against the valve seat 5 or the inside of the bore 6. The gasket ring 15 is designed with such a cross section that it is capable of sealing against both the bevel 16 and the cylindrical inner surface of the bore 6.

A certain friction between the gasket ring 15 and the inside of the bore, as well as the bevel 16 during the movement between the closed position of the valve and one of the fully or partly open positions results in at least this portion of the bore 6 being kept clean and free of deposits. At the same time, the gasket ring 15 itself is also cleaned, partly by friction and partly by deformation thereof.

The valve cone 5 is further movable to positions beyond, i.e. in the Figure below, the closed position. This entails that a cleaning of the inside of the bore 6 is possible also beyond the closed position, and problems relating to the deposition of foreign matter in the proximity of the closed position are eliminated. The possibility of moving the valve cone 5 beyond the closed position is realised in that the pin 2 is sufficiently long to permit such a movement when it is pressed in to its maximum impressed position. Further, the return spring 4 is dimensioned so that it is at maximum compression only when the valve cone 5 has been moved beyond the closed position.

The impression of the pin 2 may be put into effect manually, in that the regulator device is turned to a position where this takes place. Possibly, this movement is repeated a few times in order to ensure that a thorough cleaning of the valve is carried out. Thus, the valve need not be dismounted and any possible problems can be remedied in each one of the valves separately, without the entire central heating system being affected.

The same advantages will be attained if the pin 2 is actuated by a thermostat device. When temperatures above the temperature set by the thermostat are reached, for example during the summer, it is possible to set the thermostat device so that the pin 2 is acted on inwardly also after the set temperature has been reached. By such means, the valve will be self-cleaning, since a movement beyond the closed position is carried out by the valve cone 5 every time temperatures that are higher than the temperature setting are reached. Any possible deposited foreign matter will be cleaned off before it has time to cause any major problems in the form of hard deposits.

It is also possible to actuate the pin with the aid of a motor. The motor may be connected to a central system for climate control, where signals for starting the motor are emitted at regular intervals so that cleaning takes place periodically.

Fig. 4 shows a magnification of the gasket ring 15 in cross section. The gasket ring is disposed, as was mentioned previously, in a recess 17 in the valve cone 5. In the preferred embodiment, the recess 17, when the gasket ring 15 is mounted in place, surrounds it substantially on three sides. This implies that the recess 17 has one radially outwardly facing defining surface 18 and two mutually facing defining surfaces 19 and 20 in the axial position. Correspondingly, the gasket ring 15 has one inwardly facing surface and two surfaces 22, 23 facing transversely thereto for abutment against the surfaces 18, 19 and 20 of recess. That part of the gasket ring 15 which is free when the gasket ring 15 is inserted in the recess 17 has two circumferential major portions 24 and 25. The one major portion 24 is a free surface which, in the Figure, is substantially vertical, i.e. it is located at substantially the same distance from the inner surface 21 of the gasket ring 15 around all of the gasket ring 15.

The second portion 25 is an upwardly facing surface which is substantially transversely directed to the first free portion 24. The upwardly directed surface 25 lies at substantially the same distance from the lower axial surface 23 of the gasket ring so that the gasket ring 15 has a circumferential portion 26 of substantially uniform thickness which projects out a short distance outside the valve cone 5; in the preferred embodiment typically a few tenths of a millimetre. The two free surfaces 24, 25 thus make an angle with one another. The portion 26 of uniform thickness is slightly flexible and the flexing takes place largely at the transition between the two free surfaces 24 and 25. In such instance, a good seal against the inside of the bore 6 is possible at the same time as the valve cone 5 is movable. The sought-for cleaning of both the inside of the bore and the gasket ring 15 is thereby attained.

It is desirable to keep the friction between the gasket ring 15 and the inside of the bore 6 as low as possible. At the same time however, the gasket ring 15 must be so soft as to ensure a good seal. Since a soft gasket ring in general has a relatively high level of friction, these requirements may in principle be described as in conflict with each other, and the final material properties of the gasket ring 15 constitute something of a compromise between these wishes. However, it is possible to treat the material of the gasket ring 15 in its entirety or only on the surfaces, so as to reduce the friction.

The present invention may be modified further without departing from the scope of the appended Claims.

## Claims

1. A regulator valve for a heating system with a liquid flow medium, comprising a valve housing (1) with an inlet (13) and an outlet (14), a bore (6) located in flow terms between the inlet (13) and the outlet (14) and having an gland and a valve cone (5) supported by a valve spindle (3), the cone being, under the action of a movement device, axially reciprocally movable in relation to the gland, the valve cone (5) having a closed position and a regulation area in association with the gland, **characterised in that** the valve cone (5) is movable past the closed position into the bore (6).

2. The regulator valve as claimed in Claim 1, **characterised in that** the bore (6), apart from an entry portion (7, 16) in the area of the gland, is substantially circular-cylindrical.

3. The regulator valve as claimed in Claim 2, **characterised in that** the valve cone (5) is movable past the entry portion (7, 16) into the circular-cylindrical portion of the bore (6) and is disposed to sealingly abut therein.

4. The regulator valve as claimed in any of Claims 1 to 3, **characterised in that** the bore (6) has, in the region of the gland, a funnel-shaped flaring portion (7, 16), an entry portion, and that the regulation area includes this funnel-shaped portion.

5. The regulator valve as claimed in any of Claims 1 to 4, **characterised in that** the valve cone (5) has, along its periphery, a seal (15) produced from elastic material and which, in the undeformed state, has an excess diametrical dimension compared with the bore (6).

6. The regulator valve as claimed in Claim 5, **characterised in that** the valve cone (5) has a circumferential recess (17) for accommodating the seal (15), the recess (17) being in the form of an annulus with a substantially rectangular cross section.

7. The regulator valve as claimed in Claim 5 or 6, **characterised in that** the seal (15) has a substantially cylindrical inner periphery (21) and at least two different portions with different outer diameters, whereby the different portions of the seal (15) are of different radial thicknesses.

8. The regulator valve as claimed in Claim 7, **characterised in that** the different portions have a substantially cylindrical outer periphery (24, 25).

9. The regulator valve as claimed in Claim 7 or 8, **characterised in that** the radially thicker portion forms a flexible tongue (26) which is disposed to abut against a surface in the bore (6).

10. The regulator valve as claimed in any of Claims 1 to 9, **characterised in that** the movement device is a thermostat device.

11. The regulator valve as claimed in any of Claims 1 to 9, **characterised in that** the movement device is a manual adjustment device.
